# EUROPEAN PATENT SPECIFICATION

(11) **EP 3 819 143 B1**
(45) Date of publication and mention of the grant of the patent: **27.09.2023**
(21) Application number: 20306329.2
(22) Date of filing: 05.11.2020
(51) Int. Cl.: B60H 1/00, B60H 1/22, F24H 1/00, F24H 1/14, H05B 3/00

(54) **HEATING SYSTEM FOR FUNCTIONAL ELEMENTS OF A VEHICLE**
HEIZSYSTEM FÜR FUNKTIONSELEMENTE EINES FAHRZEUGES
SYSTÈME DE CHAUFFAGE POUR ÉLÉMENTS FONCTIONNELS D'UN VÉHICULE

(30) Priority: 06.11.2019 IT 201900020472
(43) Date of publication of application: 12.05.2021
(73) Proprietor: IVECO FRANCE S.A.S., 69200 Vénissieux (FR)
(72) Inventor: CODRON, Stephane, 69008 LYON (FR)
(74) Representative: Faraldi, Marco

(56) References cited:
- DE-A1- 19 808 571
- US-A- 5 559 924
- US-A- 5 790 752
- US-A1- 2014 191 049
- US-A1- 2018 264 914

## Description

### TECHNICAL FIELD

The invention relates to a heating system for functional elements of a vehicle, such as electric batteries or an engine.

### PRIOR ART

Some functional elements of vehicles need to be heated before being used or started. Examples of these functional elements are the internal combustion engine or high-voltage batteries.

In fact, when an internal combustion engine is started at low temperatures, it consumes more fuel and releases into the atmosphere more polluting elements compared to when it is started at high temperatures.

Furthermore, high-voltage batteries, for example lithium batteries used in electric/hybrid vehicles, must be kept at a predetermined temperature in order not to reduce their life.

This heating is normally carried out with the aid of a fluid thanks to the use of electric resistors or by means of heat exchangers and/or fans using other hot fluids circulating in the vehicle.

These known systems consume a lot of energy and are bulky. Examples of a known heating system, according to the preamble of claim 1, is disclosed in US2018/264914 A1.

Documents US5790752 A or US5559924 A discloses vessels for heating a ultrapure fluid for semiconductor industry.

US2014191049 A1 discloses a heating system comprising for an operational fluid of the vehicle and comprising a portion of the heater realized as transporent portion.

Therefore, vehicle functional elements need to be heated, as mentioned above, with a system which ensures a low energy consumption and, at the same time, is effective and compact.

The object of the invention is to solve the above-mentioned drawbacks in a simple and economic fashion.

### SUMMARY OF THE INVENTION

The objects mentioned above are reached by means of a heating system for a functional element of a vehicle according to the appended claims.

### BRIEF DESCRIPTION OF THE DRAWINGS

Further features and advantages of the invention will be best understood upon perusal of the following description, which is provided by mere way of explanatory and non-limiting example, with reference to the accompanying drawings, wherein:
- figure 1 is a schematic view of a heating system for a functional element of a vehicle according to the invention;
- figure 2 is a perspective view of an embodiment of an element of a heating system according to the invention; and
- figure 3 is a schematic cross section view of the element of figure 2.

### DETAILED DESCRIPTION OF THE INVENTION

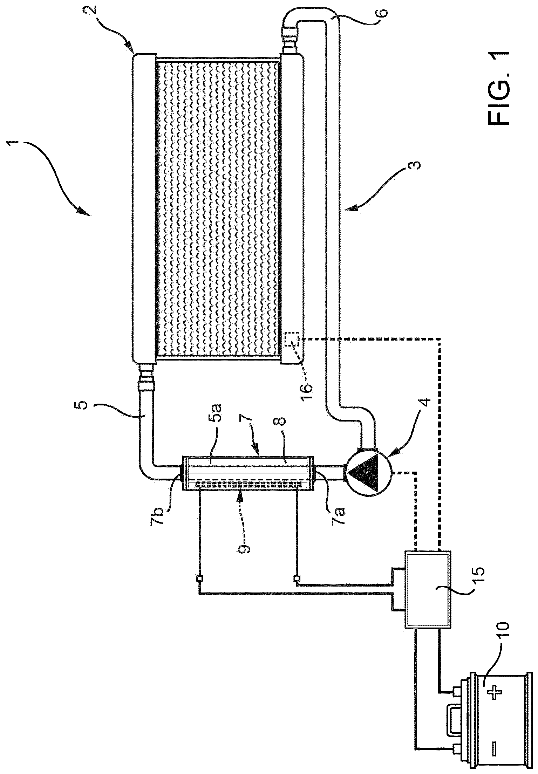

Figure 1 shows a heating system 1 for a functional element 2 of a vehicle (not shown) according to the invention; in the case shown herein, the functional element 2 generically is a body containing, for example, the batteries of a vehicle; however, it could also clearly be the internal combustion engine of the vehicle.

The system 1 comprises a fluid circuit 3 comprising a pump 4, which is configured to allow the fluid to flow inside a distribution piping 5, which is fluidically connected, downstream of the pump 4, to the functional element 2, which sucks the fluid from a return piping 6, which is fluidically connected, upstream of the pump 4, to the functional element 2.

The fluid configured to enable the exchange of heat inside the fluid circuit 3 can preferably be glycol water.

According to the invention, the heating system 1 comprises an electromagnetic radiation heater 7, which is interposed, on the fluid level, in one of the pipings 5, 6 and is configured to heat the fluid circulating inside the fluid circuit 3 between the inlet 7a and the outlet 7b of the heater 7. The heater 7 is advantageously located downstream of the pump 4.

Therefore, the heater 7 is designed to convert electrical energy into an electromagnetic radiation emission, preferably an infrared emission, namely having a wavelength ranging from 700 nm to 1 mm.

According to an embodiment of the invention, the heater 7 is located downstream of the pump 4 and is preferably integrated in the distribution piping 5.

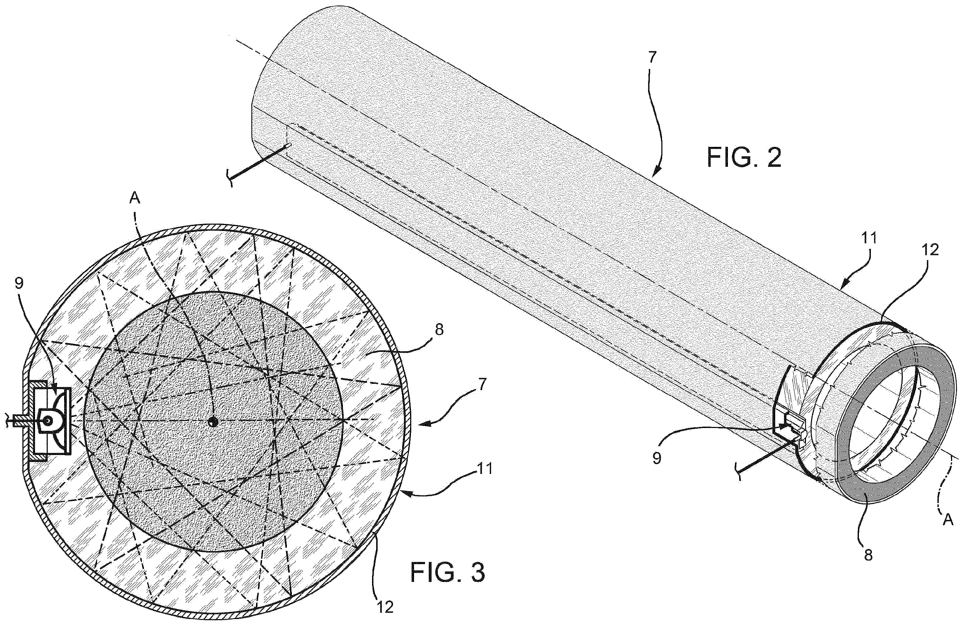

In particular, the heater can have the same size as and be installed in continuity with the distribution piping 5. Furthermore, it can be inserted along the entire length of the distribution piping 5; to be clear, in the embodiment described herein, the heater 7 is incorporated in a central part 5a of the distribution piping 5, which is shown in figure 2.

According to the invention, the heater 7 comprises a transparent pipe portion 8 made of a transparent plastic material, where the fluid of the circuit 3 can flow.

The heater 7 also comprises infrared radiation emitter means 9, which are configured to emit infrared beams towards the fluid flowing in the transparent pipe portion 8 in order to heat the fluid.

Said emitter means 9 are electrically connected to a power source 10, such as a low-voltage electric battery, which is housed in the vehicle.

The emitter means 9 are integrated inside the transparent pipe portion 8, which, as it is transparent, allows infrared beams to reach the fluid circulating inside it.

More preferably, the emitter means 9 can be available in the form of a thread-like element arranged along the entire length of the heater 7, preferably parallel to a longitudinal axis A of the transparent pipe portion 8.

The heat 7 advantageously comprises shielding means 11, which are configured to prevent the infrared beams from exiting the transparent pipe portion 8 and to reflect them inside the transparent pipe 8 portion. Said shielding means 11 can preferably comprise an outer layer 12, which is made of a reflecting material and is housed around the outer surface of the transparent pipe 8 portion.

More in detail, the outer layer 12 can be available in the form of an aluminium sheet completely covering the transparent pipe portion 8 on the outer surface thereof.

The heating system 1 can also comprise an electronic control unit 15, which is electronically connected to the heater 7 and, if necessary, to the pump 4 and is configured to control the operation thereof, namely the operation of the emitter means 9 based on a predetermined condition.

The electronic unit 15 comprises processing means, which are configured to store a plurality of predetermined conditions or to process a predetermined condition based on the signals received by the electronic unit itself.

An example of a predetermined condition stored in the electronic unit 15 can be a time condition, namely, for example, the activation of the heater 7 and/or of the pump 4 depending on a predetermined time.

An example of a predetermined condition processed based on the signals received can be an activation based on the starting of the vehicle or on other operating conditions thereof.

The heating system 1 can preferably comprise sensor means 14, which are configured to acquire data representing the temperature of the functional element 2 and are electrically connected to the electronic unit 15 in order to allow for the acquisition of the temperature.

As a consequence, a possible predetermined condition processed starting from the signals received can be a closed-loop or open-loop control based on the temperature sensors 14 of the functional element 2.

The operation of a heating system 1 of the type disclosed above is described below.

When necessary, as indicated above according to a predetermined condition of the aforesaid type, the pump 4 starts causing the fluid to circulate inside the circuit 3. The fluid flowing inside the heater 7 flows out of the opening 7b at a temperature that is higher than the inlet temperature.

In fact, by flowing through the transparent pipe portion 8, the fluid is hit by a multitude of infrared beams R generated by the emitter means 9, which tend to heat it. Furthermore, thanks to the shielding means 11, the infrared beams R reflect inside the pipe portion 8 without exiting it. In this way, the thermal energy provided by the infrared beams generated by the emitter means 9 is not dispersed outwards by the heater 7.

After having flown through the functional element 2, where, for example a heat exchanger or a piping system is available in order to distribute the heat of the fluid to the functional element 2, the cooled fluid returns to the pump 4 inside the heater 7.

Clearly, in case there are the sensor means 16 and the electronic unit 10, it is also possible to provide a control method comprising the following steps:
- identifying data indicating of the temperature of the functional element 2;
- comparing the temperature with a threshold temperature stored in the electronic unit 15;
- if the temperature is higher than the temperature threshold, the electronic unit 15 does not activate the pump 4 and/or the heater 7;
- if the temperature is lower than the threshold temperature, the electronic unit 15 activates the pump 4 and/or the heater 7.

In particular, the thermal energy delivered by the emitter means 9 - in the form of infrared beams - to the fluid circulating in the transparent pipe portion 8 can be adjusted depending on the fluid flow in the circuit and on the temperature of the functional element 2, according to well known laws of thermodynamics.

Owing to the above, the advantages of a heating system 1 for a functional element of a vehicle according to the invention are clearly evident.

The heating system 1 disclosed herein is extremely light, compact and highly efficient.

In fact, the absorption of the infrared beams R is almost total thanks to the shielding means 11. Furthermore, the transparent pipe portion 8 heated by the beams R heats, in turn, the fluid through contact.

Moreover, since the emitter means 9 are integrated in the transparent pipe portion 8, the heater 7 can be placed along the pipings 5, 6 in any position, regardless of whether they are rigid or flexible.

In addition, the emitter means 9 consume low-voltage power and, therefore, can be powered by a traditional low-consumption electric battery, which has small costs.

Finally, the heating system 1 for a functional element of a vehicle according to the invention can clearly be subjected to changes and variants, which, though, do not go beyond the scope of protection set forth in the claims.

For example, the heating system 1 described herein can comprise a topology of the pipings 5, 6 of the different fluid circuits 3 as well as other hydraulic elements.

Furthermore, the heating system 1 can comprise different heaters 7, which, in turn, can comprise a transparent pipe portion 8 with any shape and made of any transparent material suited for the purpose.

Moreover, the emitter means 9 and the shielding means 11 can be manufactured in a different manner and comprise, for example, different reflecting layers 12 or different infrared radiation emitters or filaments arranged differently, depending on the geometry of the transparent pipe 8 and on the quantity of fluid to be heated.

In addition, the sensor means 16 and the control unit 15 could carry out different functions of control of the type of functional element 2 with which they are associated.

## Claims

1. A heating system (1) for a functional element (2) of a vehicle, said heating system (1) comprising a fluid circuit (3) comprising a pump (4) configured to circulate the fluid in said fluid circuit (3) and at least a heater (7), said heater (7) being integrated in at least one of the piping (5, 6) of said fluid circuit (3), **characterized in that** said heater (7) comprises a pipe portion (8) made of transparent material configured to enable the passage therein of said fluid and electromagnetic radiation emitter means (9) integrated into the transparent material of said pipe portion (8) and positioned, with respect to this latter to direct said electromagnetic radiation towards said fluid in order to heat it.

2. The heating system according to claim 1, wherein said electromagnetic radiation has a wavelength comprised between 700 nm and 1 mm.

3. The heating system according to one of the preceding claims, wherein said emitter means (9) have a linear shape parallel to a longitudinal axis (A) of said pipe portion (8).

4. The system according to one of the preceding claims, wherein said heater (7) comprises shielding means (11) configured to prevent said electromagnetic radiation from exiting said pipe portion (8).

5. The system according to claim 4, wherein said shielding means (11) comprise a layer (12) that surrounds the entire outer surface of said pipe portion (8), said layer (12) being configured to reflect said electromagnetic radiation.

6. The system according to claim 5, wherein the layer (12) is made of aluminium.

7. The system according to one of the preceding claims, comprising an electronic control unit (15) electrically connected to said pump (4) and to said emitter means (9) in order to control their operation according to a pre-determined condition.

8. The system according to claim 7, comprising sensor means (16) configured to measure a datum corresponding to the temperature of said functional element (2), said electronic control unit (15) being configured to acquire said data and process it in order to control said pump (4) and/or said emitter means (9).

9. A method for controlling a heating system (1) according to claim 8, comprising the following steps:
• identifying a data indicative of the temperature of said functional element (2);
• comparing this temperature with a threshold temperature stored in said electronic unit (15);
• if this temperature is higher than this temperature threshold, said electronic unit (15) does not activate said pump (4) and/or said heater (7);
• if this temperature is lower than this threshold temperature, said electronic unit (15) activates said pump (4) and/or said heater (7).

## Patentansprüche

1. Heizsystem (1) für ein Funktionselement (2) eines Fahrzeugs, welches Heizsystem (1) einen Fluid-Kreislauf (3) mit einer Pumpe (4) zur Zirkulation des Fluids in dem Fluid-Kreislauf (3) und zumindest eine Heizung (7) umfasst, welche Heizung (7) in zumindest eines der Rohre (5, 6) des Fluidkreislaufs (3) integriert ist, **dadurch gekennzeichnet, dass** die Heizung (7) einen Rohrabschnitt (8) aus einem transparenten Material, ausgebildet zum Durchlass des Fluids, und ein Emissionsmittel (9) für elektromagnetische Strahlung umfasst, welches in das transparente Material des Rohrabschnitts (8) integriert ist und bezüglich des letzteren derart positioniert ist, dass sie elektromagnetische Strahlung in Richtung des Fluids zum Erhitzen desselben richten.

2. Heizsystem gemäß Anspruch 1, bei welchem die elektromagnetische Strahlung eine Wellenlänge zwischen 700 nm und 1 mm aufweist.

3. Heizsystem gemäß einem der vorhergehenden Ansprüche, bei welchem das Emissionsmittel (9) eine lineare Form parallel zu einer Längsachse (A) des Rohrabschnitts (8) aufweist.

4. System gemäß einem der vorhergehenden Ansprüche, bei welchem die Heizung (7) Abschirmmittel (11) umfasst, dazu ausgebildet, die elektromagnetische Strahlung daran zu hindern, aus dem Rohrabschnitt (8) auszutreten.

5. System gemäß Anspruch 4, bei welchem die Abschirmmittel (11) eine Schicht (12) umfassen, welche die gesamte äußere Oberfläche des Rohrabschnitts (8) umgibt, welche Schicht (12) dazu ausgebildet ist, elektromagnetische Strahlung zu reflektieren.

6. System gemäß Anspruch 5, bei welchem die Schicht (12) aus Aluminium besteht.

7. System gemäß einem der vorhergehenden Ansprüche, umfassend eine elektronische Steuereinheit (15), die elektrisch mit der Pumpe (4) und dem Emissionsmittel (9) verbunden sind, um deren Betrieb entsprechend einer vorbestimmten Bedingung zu steuern.

8. System gemäß Anspruch 7, umfassend Sensormittel (16) zur Messung eines Datums entsprechend der Temperatur des Funktionselements (2), wobei die elektronische Steuereinheit (15) dazu ausgebildet ist, die Daten zu erfassen und zu verarbeiten, um die Pumpe (4) und/oder das Emissionsmittel (9) zu steuern.

9. Verfahren zur Steuerung eines Heizsystems (1) gemäß Anspruch 8, umfassend die folgenden Schritte:
- Identifikation eines Datums, welches die Temperatur des Funktionselements (2) angibt;
- Vergleich dieser Temperatur mit einer Schwellwert-Temperatur, die in der elektronischen Einheit (15) gespeichert ist;
- falls diese Temperatur höher ist als diese Temperaturschwelle, aktiviert die elektronische Einheit (15) die Pumpe (4) und/oder die Heizung (7) nicht;
- und falls diese Temperatur niedriger ist als diese Schwellwert-Temperatur, aktiviert die elektronische Einheit (15) die Pumpe (4) und/oder die Heizung (7).

## Revendications

1. Système de chauffage (1) pour un élément fonctionnel (2) d'un véhicule, ledit système de chauffage (1) comprenant un circuit de fluide (3) comprenant une pompe (4) configurée pour faire circuler le fluide dans ledit circuit de fluide (3) et au moins un radiateur (7), ledit radiateur (7) étant intégré dans au moins une des canalisations (5, 6) dudit circuit de fluide (3), **caractérisé en ce que** ledit radiateur (7) comprend une partie de tuyau (8) faite de matériau transparent configurée pour permettre le passage dans celle-ci dudit fluide et des moyens d'émission de rayonnement électromagnétique (9) intégrés dans le matériau transparent de ladite partie de tuyau (8) et positionnés, par rapport à celle-ci, de manière à diriger ledit rayonnement électromagnétique vers ledit fluide pour le chauffer.

2. Système de chauffage selon la revendication 1, dans lequel ledit rayonnement électromagnétique présente une longueur d'onde comprise entre 700 nm et 1 mm.

3. Système de chauffage selon l'une quelconque des revendications précédentes, dans lequel lesdits moyens d'émission (9) présentent une forme linéaire parallèle à un axe longitudinal (A) de ladite partie de tuyau (8).

4. Système selon l'une quelconque des revendications précédentes, dans lequel ledit radiateur (7) comprend des moyens de protection (11) configurés pour empêcher que ledit rayonnement électromagnétique ne sorte de la partie de tuyau (8).

5. Système selon la revendication 4, dans lequel lesdits moyens de protection (11) comprennent une couche (12) qui entoure la totalité de la surface extérieure de ladite partie de tuyau (8), ladite couche (12) étant configurée pour réfléchir ledit rayonnement électromagnétique.

6. Système selon la revendication 5, dans lequel la couche (12) est faite d'aluminium.

7. Système selon l'une quelconque des revendications précédentes, comprenant une unité de commande électronique (15) reliée de manière électrique à ladite pompe (4) et auxdits moyens d'émission (9) pour commander leur fonctionner selon une condition prédéterminée.

8. Système selon la revendication 7, comprenant des moyens formant capteurs (16) configurés pour mesurer une donnée correspondant à la température dudit élément fonctionnel (2), ladite unité de commande électronique (15) étant configurée pour acquérir lesdites données et les traiter pour commander ladite pompe (4) et/ou lesdits moyens d'émission (9).

9. Procédé de commande d'un système de chauffage (1) selon la revendication 8, comprenant les étapes suivantes :
- l'identification de données indiquant la température dudit élément fonctionnel (2) ;
- la comparaison de ladite température à une valeur de seuil stockée dans ladite unité électronique (15) ;
- si la température est plus élevée que ledit seuil de température, ladite unité électronique (15) n'active pas ladite pompe (4) et/ou ledit radiateur (7) ;
- si la température est inférieure à ladite température de seuil, ladite unité électronique (15) active ladite pompe (4) et/ou ledit radiateur (7).
